Europäisches Patentamt

(19) European Patent Office

Office européen des brevets

(11) Publication number: **0 012 564**
**B1**

(12) **EUROPEAN PATENT SPECIFICATION**

(45) Date of publication of patent specification: **15.12.82**

(21) Application number: **79302798.8**

(22) Date of filing: **05.12.79**

(51) Int. Cl.³: **F 41 G 7/22, G 12 B 15/06,**
**G 01 J 5/06**

(54) Heat transfer device and radiation detector apparatus including such a device.

(30) Priority: **06.12.78 US 966972**

(43) Date of publication of application:
**25.06.80 Bulletin 80/13**

(45) Publication of the grant of the patent:
**15.12.82 Bulletin 82/50**

(84) Designated Contracting States:
**BE DE FR GB NL SE**

(56) References cited:
**US - A - 2 712 236**
**US - A - 3 103 587**
**US - A - 3 813 518**
**US - A - 3 994 277**
**US - A - 4 008 395**
**US - A - 4 087 061**

(73) Proprietor: **FORD AEROSPACE &**
**COMMUNICATIONS CORPORATION**
**300 Renaissance Center P.O. Box 43339**
**Detroit, Michigan 48243 (US)**

(72) Inventor: **Reisman, Elias**
**839 Palmdale Avenue**
**Orange, California 92665 (US)**
Inventor: **Masino, Fred Silvio**
**2519 Littleton Place**
**Costa Mesa, California 92626 (US)**
Inventor: **Goodsell, David Scott**
**2559 Santa Ana Avenue**
**Costa Mesa, California, 92627 (US)**

(74) Representative: **Crawford, Andrew Birkby et al,**
**A.A. THORNTON & CO. Northumberland House**
**303-306 High Holborn**
**London WC1V 7LE (GB)**

Courier Press, Leamington Spa, England.

Heat transfer device and radiation detector apparatus including
such a device

The present invention relates to the area of heat transfer, and more specifically to a heat transfer device of a type comprising means for producing heat energy, means for removing heat from said heat producing means and transferring said heat to a first heat conducting path element, and a heat sink mounted to receive said heat from said first heat conducting path element. The present invention further relates to a radiation detector assembly including such a device.

It has previously been thought necessary to have good physical contact between members for efficient conductive heat dissipation to take place, and in general it is usually desired to reduce to a minimum the number of interfaces in the path of heat flow.

This apparent requirement has led to problems in various fields wherein it would be advantageous to provide a low thermal resistance path between two relatively movable members. One such field is that of radiation detection, particularly when detection apparatus is used in missiles or other vehicles in order to detect radiant energy from a remote source.

Gimbal mounted radiation detectors have been proposed in the prior art which are movable either with a commonly gimballed optical system or movable with respect to a fixed optical system. However, efficient detector cooling could not be provided for those detectors in view of the problems involved in providing good physical contact between the gimballed detector and a fixed heat sink.

Thermoelectric type cooling systems have been widely employed in radiant energy detectors to maintain the energy detection elements at relatively low temperatures and constant sensitivity see for example U.S. Patent 3,103,587. However, in those systems, the detecting elements were generally mounted on non-movable heads and associated with flexible optic systems. Flexible optic systems generally comprised movable relay mirrors which provided the necessary focusing and directing of selected or scanned images on to the relatively fixed detectors. Furthermore, conventional thermoelectric cooling systems required direct mechanical connections of the detecting elements to their associated heat sinks, in order to provide thermally efficient cooling paths for heat generated at the detecting elements.

It has also been proposed to cool devices by radiation over a non-contacting thermal path, see for example U.S. Patent 3,994,277. Further, it has been proposed to employ a non-contacting low thermal resistivity path between a heated rotating roller and a stationary temperature sensing bulb, see U.S. Patent No. 2,712,236, but in this case no cooling of the roller is effected thereby.

In contrast to the generally accepted belief that physical contact is necessary for efficient conductive heat dissipation, we have found that a small gap between the members does not have as deleterious an effect on heat transfer as might be expected, and in fact in some cases, heat transfer is actually improved with a small gap between the members when compared to an equivalent contacting arrangement, depending on the areas of contact. This discovery makes possible an efficient thermal transfer path between relatively movable member, such as the relatively movable parts of a gimbal mounted radiation detector.

The present invention therefore provides a heat transfer device of the above type characterised in that there are provided means for mounting said heat producing means, said removing means and said first heat conducting path element for movement and variable orientation with respect to said heat sink, and means for providing a non-contacting low thermal resistivity path between said first heat conducting path element and said heat sink.

The term "thermal resistivity" is used herein to mean the thermal resistance per unit area. Thus it is a distance-dependent measure, i.e. in a thermal transfer system having opposite faces, the thermal resistivity of the system will vary as the distance between the faces varies.

A movable radiation detector element may thus be efficiently cooled by providing the non-contacting low thermal resistivity path between a relatively movable heat source and the relatively fixed heat sink.

It has been found that fluid gases, such as air, nitrogen, etc., have certain thermal resistivity characteristics, over small distances, resembling efficient thermal conductors and such gases can therefore be used to provide the non-contacting thermal path. This is in contrast to the conventional notion that those gases act as thermal insulators.

The invention is described herein as being embodied in a gimballed detector assembly to provide a low resistance thermal energy path from a heat source to a heat sink. In that embodiment, an optical lens system, a detecting element and a thermoelectric cooler are commonly mounted in a head, which is movable about two orthogonal axes. The hot side of the thermoelectric cooler is directly connected to a conducting surface having a convex partial spherical shape. A relatively fixed heat sink is directly connected to a conducting surface having a concave partial spherical shape corresponding to the movable surface. The two opposing surfaces are concentric and appear to form a ball and socket connection. However, a small gap is maintained between the two surfaces, providing a non-contacting low resistance thermal energy path therebetween.

Such a gimballed detector/thermoelectric cooler assembly has a high efficiency that allows the detector to maintain a constant focus position in a commonly gimballed optical system.

In order that the present invention may be more readily understood, an embodiment thereof will now be described, by way of example, with reference to the accompanying drawings, in which:

Figure 1 is a plot of thermal resistivity as a function of gap size for air, and

Figure 2 is a revolved cross section partially showing two orthogonal axes projections of a radiation detector assembly employing the present invention.

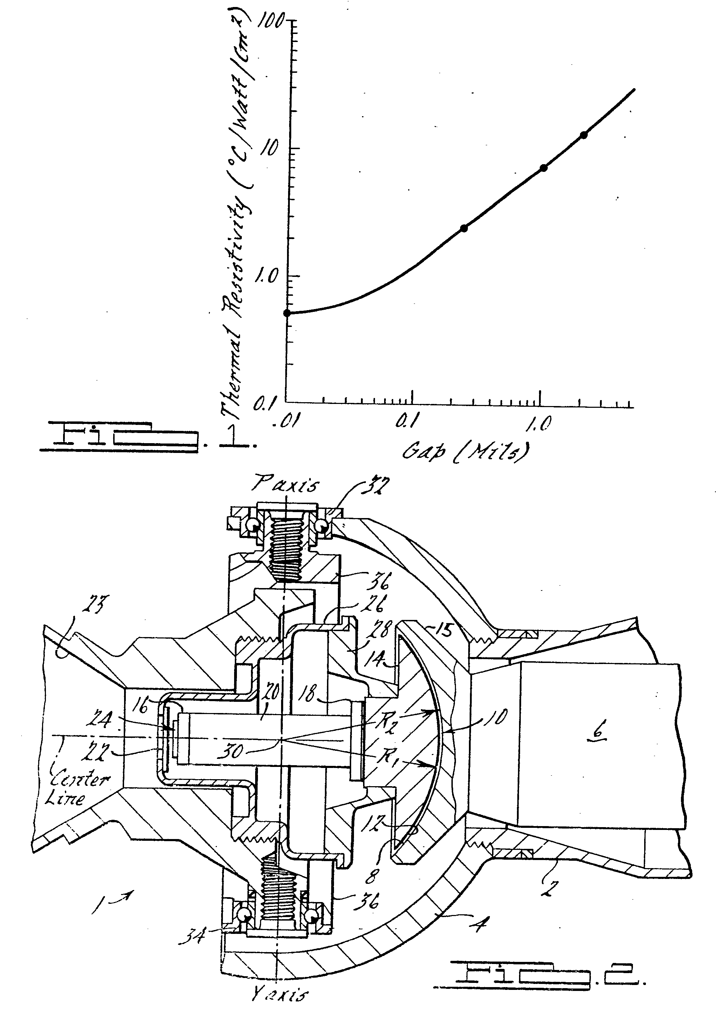

Figure 1 shows measurements made by constructing a test jig and monitoring temperature drops across various dimensional air gaps between two heat conducting surfaces.

Figure 1 shows that, for gaps up to approximately 1 mil (.0254 mm) the thermal resistivity ($°C/watt/cm^2$) is less than $10°C/watt/cm^2$. Such thermal resistivity compares favourably with the conventional heat path for a non-gimballed thermoelectric cooling system described above with respect to the prior art. Conventional thermal resistivity is of the order of $14°C/watt/cm^2$ in a typical system with 2 watts carried between the heat source and the heat sink.

The preferred embodiment is shown in Figure 2, where a gimballed detector assembly 1 is detailed.

The detector assembly 1 is of the type generally suited for use in missiles or other movable vehicles where it is desired to detect radiant energy from a remote source. In this instance, an outer housing ring 4 is mounted on a relatively fixed mounting 2. The outer housing ring 4 contains a set of bearings 32 (one of the set is not shown), which support an inner gimbal ring 36 for rotation about the pitch axis "P". The inner gimbal ring 36 contains a set of ball bearings 34 (one of the set is not shown) which support the detector assembly for rotation about the yaw axis "Y", orthogonal to the "P" axis.

Figure 2 illustrates the embodiment of the invention in orthogonal cross-section, wherein the top half of Figure 2 is a sectional view parallel to the Y axis and the bottom half is a sectional view parallel to the P axis. Therefore, although the Y and P axes appear as a single line in Figure 2, it should be realized that in the embodiment they are in fact orthogonal axes which intersect at a point 30.

The detector assembly 1 is mounted on the inner gimbal ring 36, within a detector housing 26 which is attached to a radiation shield 23. The detector housing 26 includes a window 22 which is transparent to the particular wavelength of radiation to be detected, such as infrared. A detector element 24, such as an infrared detector, is mounted so as to receive radiant energy from a remote source through the window 22 and a commonly gimballed lens system (not shown). In order to maintain the sensitivity of the infrared detector element 24, a cooling element 20 serves to extract heat therefrom. In this embodiment, a thermoelectric cooling element 20, having a cold electrode 16 and a hot electrode 18, serves to extract heat from the detector element 24 and transfer that heat from the cold electrode 16 to the hot electrode 18. The hot electrode 18 is mounted on a low thermal resistivity element 14 and is in intimate contact therewith. Support members 28 serve to provide a rigid connection between the low thermal resistivity element 14 and the detector housing 26. The low resistivity element 14 has a first convex partial spherical surface 12 with its spherical radius $R_1$ centered at point 30. Therefore, as the detector assembly 1 is moved about the gimballed axes, the surface 12 of the low resistivity element 14 will move so as to define part of the outer surface of a sphere.

A heat sink 6 is located within the relatively fixed housing 2 and may be of a conventional dissipative or eutectic storage type. The heat sink 6 serves to receive thermal energy extracted by the thermoelectric cooler 20 in the detector assembly 1. The energy is received from the low resistivity thermal element 14 via a similar low thermal resistivity element 15. The low thermal resistivity element 15 may be considered to be part of the heat sink 6 or a separate path member with negligible losses. The low thermal resistivity element 15 has a concave partial spherical surface 8 with a spherical radius $R_2$ centered at point 30. The partial spherical surface 8 is concentric with and opposing to the partial spherical surface 12 of the low resistivity thermal element 14. The radii $R_1$ and $R_2$ differ by an amount which defines a space 10. The space 10 is filled with a gaseous fluid material, such as air or nitrogen, and the distance thereacross should be close enough to provide that the thermal resistivity of the gaseous fluid material is less than $10°C/watt/cm^2$.

The preferred embodiment discussed above is of benefit to those involved in missile detector design since it eliminates the need for cumbersome relay mirrors and their associated mounting mechanisms in the receiving optical system, while at the same time providing efficient cooling of the detector.

**Claims**

1. A heat transfer device comprising means (24) for producing heat energy, means (20) for removing heat from said producing means (24) and transferring said heat to a first heat conducting path element (14), and a heat sink (6) mounted to receive said heat from said first heat conducting path element (14), characterised in that there are provided means (4, 28, 32, 34, 36) for mounting said producing means (24), said removing means (20) and said first heat conducting path element (14) for movement and variable orientation with respect to said heat sink (6), and means (10, 15) for providing a non-contacting low thermal resistivity path between said first heat conducting path element (14) and said heat sink (6).

2. A device according to claim 1, wherein said non-contacting path means (10, 15) is defined as a continuous gap (10) between said first heat conducting path element (14) and said heat sink (6).

3. A device according to claim 2, wherein said continuous gap (10) is filled with a gaseous fluid and has a heat conducting path length of approximately 1 mil (.0254 mm).

4. A device according to claim 2 or claim 3, wherein said continuous gap (10) is filled with a gaseous fluid that has a thermal resistivity of less than $10°C/watt/cm^2$ across said gap.

5. A device according to claim 2, 3 or 4, wherein said mounting means comprises a gimbal assembly (28, 32, 34, 36) which provides movement of said producing means (24), said removing means (20) and said first heat conducting path element (14) about two orthogonal axes (P,Y) and said continuous gap (10) is bounded by a surface (12) at said first heat conducting path element (14) forming a convex partial sphere of a first radius ($R_1$) extending from a centre point (30) coincident with the crossover point of the gimbal axes (P,Y) and by an opposing surface (8) of said heat sink (6) forming a concave partial sphere of a second radius ($R_2$) extending from said centre point (30), and wherein said first radius ($R_1$) is smaller than said second radius ($R_2$) by approximately 1 mil (.0254 mm).

6. A device according to any one of claims 2 to 5, wherein said non-contacting path means (10, 15) utilizes a gaseous fluid heat conducting medium in said continuous gap (10).

7. A device according to claim 6, wherein said gaseous fluid is air.

8. A device according to claim 6, wherein said gaseous fluid is nitrogen.

9. A radiation detector assembly comprising a radiation detector element (24), a thermoelectric cooler (20) having defined hot and cold conductors (18, 16), and a heat sink (6) mounted within a relatively fixed body (2, 4),

characterised in that there are provided a gimbal assembly (28, 32, 34, 36) attached to said relatively fixed body (2, 4) for mounting said thermoelectric cooler (20) and detector element (24) to provide relative movement about two orthogonal axes (P,Y) and means for transferring heat from the relatively movable hot conductor (18) to said heat sink (6), said heat transferring means including a first low thermal resistivity element (14) mounted on said hot conductor (18), a second low thermal resistivity element (15) mounted within said body (2, 4) in contact with said heat sink (6), and a gaseous fluid medium having a low thermal resistivity located between said first and second low thermal resistivity elements (14, 15) to provide a non-contacting thermal conducting path (10) therebetween.

10. An assembly according to claim 9, wherein said medium is air and said first and second low thermal resistivity elements (14, 15) are separated by a continuously spaced gap (10) of approximately 1 mil (.0254 mm).

11. An assembly according to claim 9 or claim 10, wherein said medium has a thermal resistivity below $10°C/watt/cm^2$ between said first and second low thermal resistivity elements (14, 15).

12. An assembly according to claim 9, 10 or 11, wherein said first low thermal resistivity element (14) has a convex partial spherical surface (12) of a first radius ($R_1$) having its spherical centre located at the intersection (30) of said orthogonal axes (P,Y), said second low thermal resistivity element (15) has a concave partial spherical surface (8) of a second radius ($R_2$) which is greater than said first radius ($R_1$) to define a continuous space (10) therebetween, and said gaseous fluid medium occupies said space.

**Revendications**

1. Dispositif de transfert de chaleur comprenant un dispositif (24) pour produire de l'énergie calorifique, un dispositif (20) pour extraire de la chaleur dudit dispositif (24) produisant de la chaleur et pour transférer ladite chaleur à un premier élément (14) de circuit conducteur de la chaleur, et un dissipateur thermique (6) monté pour recevoir ladite chaleur dudit premier élément (14) de circuit conducteur de la chaleur, caractérisé en ce qu'il comporte un dispositif (4, 28, 32, 34, 36) pour monter ledit dispositif (24) produisant de la chaleur, ledit dispositif d'extraction (20) et ledit premier élément (14) de circuit conducteur de la chaleur, pour permettre un mouvement et une orientation variables par rapport audit dissipateur thermique (6) et un dispositif (10, 15) établissant un circuit sans contact de faible résistivité thermique entre ledit premier élément (14) de circuit conducteur de la chaleur et ledit dissipateur thermique (6).

2. Dispositif selon la revendication 1 dans lequel ledit circuit sans contact (10, 15) est défini comme un intervalle continu (10) entre ledit premier élément (14) de circuit conducteur de la chaleur et ledit dissipateur thermique (6).

3. Dispositif selon la revendication 2, dans lequel ledit intervalle continu (10) est rempli d'un fluide gazeux et a une longueur de circuit conducteur de la chaleur d'environ 1 mil (0,0254 mm).

4. Dispositif selon la revendication 2 ou la revendication 3, dans lequel ledit intervalle continu (10) est rampli avec un fluide gazeux qui a une résistivité thermique de moins de 10°C/Watts/cm² dans ledit intervalle.

5. Dispositif selon la revendication 2, 3 ou 4, dans lequel ledit dispositif de montage comporte un ensemble de cardan (28, 32, 34, 36) qui permet un mouvement dudit dispositif (24) produisant de la chaleur, dudit dispositif d'extraction (20) et dudit premier élément (14) de circuit conducteur de la chaleur autour de deux axes orthogonaux (P, Y) et ledit intervalle continu (10) est limité par une surface (12) sur ledit premier élément (12) de circuit conducteur de la chaleur formant une sphère partielle convexe d'un premier rayon (R₁) s'étendant à partir d'un point central (30) coincidant avec le point de croisement des axes de cardan (P, Y), et par une surface opposée (8) dudit dissipateur thermique (6) formant une sphère partielle concave d'un second rayon (R₂) s'étendant à partir dudit point central (30), et dans lequel ledit premier rayon (R₁) est plus petit que ledit second rayon (R₂) d'environ 1 mil (0,0254 mm).

6. Dispositif selon l'une quelconque des revendications 2 à 5, dans lequel ledit circuit sans contact (10, 15) utilise un agent conducteur de chaleur en fluide gazeux dans ledit intervalle continu (10).

7. Dispositif selon la revendication 6, dans lequel ledit fluide gazeux est de l'air.

8. Dispositif selon la revendication 6, dans lequel ledit fluide gazeux est de l'azote.

9. Ensemble détecteur de rayonnement, comprenant un élément (24) détecteur de rayonnement, un refroidisseur thermoélectrique (20) comportant des conducteurs chaud et froid définis (18, 16) et un dissipateur thermique (6) monté dans un corps (2, 4) relativement fixe, caractérisé en ce qu'il comporte un ensemble de cardan (28, 32, 34, 36) fixé sur ledit corps (2, 4) relativement fixe pour monter ledit refroidisseur thermoélectrique (20) et ledit élément détecteur (24) afin de permettre un mouvement relatif autour de deux axes orthogonaux (P, Y) et un dispositif pour transférer de la chaleur depuis le conducteur chaud (18) relativement mobile vers ledit dissipateur thermique (6), ledit dispositif de transfert de chaleur comprenant un premier élément (14) de faible résistivité thermique monté sur ledit conducteur chaud (18), un second élément (15) de faible résistivité thermique monté dans ledit corps (2, 4) en contact avec ledit dissipateur thermique (6) et un agent fluide gazeux ayant une faible résistivité thermique situé entre lesdits premier et second éléments (14, 15) de faible résistivité thermique pour former entre eux un circuit (10) conducteur thermique sans contact.

10. Ensemble selon la revendication 9, dans lequel ledit agent est de l'air et lesdits premier et second éléments (14, 15) de faible résistivité thermique sont séparés par un intervalle d'espacement continu (10) d'environ 1 mil (0,0254 mm).

11. Ensemble selon la revendication 9 ou la revendication 10, dans lequel ledit agent a une résistivité thermique au-dessous de 10°C/Watts cm² entre lesdits premier et second éléments (14, 15) de raible résistivité thermique.

12. Ensemble selon la revendication 9, 10 ou 11 dans lequel ledit premier élément (14) de faible résistivité thermique a une surface partiellement sphérique convexe (12) d'un premier rayon (R₁) avec un centre de sphère situé à l'intersection (30) desdits axes orthogonaux (P, Y), ledit second élément (15) de faible résistivité thermique ayant une surface partiellement sphérique concave (8) d'un second rayon (R₂) qui est plus grand que ledit premier rayon (R₁) pour définir un espace continu (10) entre elles, et ledit agent fluide gazeux occupant ladite place.

**Patentansprüche**

1. Wärmeübertragungsgerät mit einer Einrichtung (24) zum Erzeugen von Wärmeenergie, einer Einrichtung (20) zum Entfernen der Wärme von der erzeugenden Einrichtung (24) und zum Übertragen der Wärme zu einem ersten wärmeleitenden Wegelement (14), und mit einer Wärmesenke (6), die befestigt ist, um Wärme von dem ersten wärmeleitenden Wegelement (14) zu empfangen, dadurch gekennzeichnet, daß eine Einrichtung (4, 28, 32, 34, 36) vorgesehen ist, um die erzeugende Einrichtung (24), die entfernende Einrichtung (20) und das erste wärmeleitende Wegelement (14) für eine Bewegung und variable Ausrichtung bezüglich der Wärmesenke (6), zu befestigen und daß eine Einrichtung (10, 15) vorgesehen ist, um einen berührungsfreien Weg mit niedrigem thermischen Widerstand zwischen dem ersten wärmeleitenden Wegelement (14) und der Wärmesenke (6) zu schaffen.

2. Gerät nach Anspruch 1, in dem die berührungsfreie Wegeinrichtung (10, 15) ale gleichförmiger Spalt (10) zwischen dem ersten wärmeleitenden Wegelement (14) und der Wärmesenke (6) definiert ist.

3. Gerät nach Anspruch 2, in dem der gleichförmige Spalt (10) mit einem Flüssiggas gefüllt ist und eine wärmeleitende Weglänge von ungefähr 0,0254 mm (1 mil) hat.

4. Gerät nach Anspruch 2 oder 3, in dem der gleichförmige Spalt (10) mit einem Flüssiggas gefüllt ist, das einen thermischen Widerstand von weniger als 10°C/(Watt/cm²) quer zum Spalt aufweist.

5. Gerät nach Anspruch 2, 3 oder 4, in dem die Befestigungseinrichtung eine Kardananordnung (28, 32, 34, 36) aufweist, die eine Bewegung der erzeugenden Einrichtung (24), der entfernenden Einrichtung (20) und des ersten wärmeleitenden Wegelementes (14) um zwei senkrecht aufeinanderstehende Achsen (P, Y) hervorruft und in dem der gleichförmige Spalt (10) durch eine Oberfläche (12) an dem ersten wärmeleitenden Wegelement (14), die eine konvexe Teilfläche mit einem ersten Radius (R₁)

bildet, der sich von einem Mittelpunkt (30) aus erstreckt und der mit dem Schnittpunkt der Kardanachsen (P, Y) zusammenfällt, und durch eine gegenüberliegende Oberfläche (8) der Warmesenke (6) begrenzt ist, die eine konkave Teilfläche mit einem zweiten Radius $(R_2)$ bildet, der sich vom Mittelpunkt (30) aus erstreckt, und in dem der erste Radius $(R_1)$ um ungefähr 0,0254 mm (1 mil) kleiner ist als der zweite Radius $(R_2)$.

6. Gerät nach einem der Ansprüche 2 bis 5, in dem die berührungsfreie Wegeinrichtung (10, 15) ein Flüssiggas-Wärmeleitungsmedium in dem gleichförmigen Spalt (10) benutzt.

7. Gerät nach Anspruch 6, in dem das Flüssiggas Luft ist.

8. Gerät nach Anspruch 6, in dem das Flüssiggas Nitrogen ist.

9. Strahlungsfühleranordnung mit einem Strahlungsfühlerelement (24), einem thermoelektrischen Kühler (20) mit festgelegten Warm- und Kaltleitern (18, 16), und einer Wärmesenke (6), die innerhalb eines relativ befestigten Körpers (2, 4) befestigt ist, dadurch gekennzeichnet, daß eine Kardaneinrichtung (28, 32, 34, 36) vorgesehen ist, die an dem relativ befestigten Körper (2, 4) angebracht ist, um den thermoelektrischen Kühler (20) und das Fühlerelement (24) zu befestigen, um eine relative Bewegung um zwei senkrecht aufeinander stehende Achsen (P, Y) zu schaffen und um eine Einrichtung zum Übertragen von Wärme von dem relativ beweglichen heißen Leiter (18) zu der Wärmesenke (6) zu schaffen, wobei die wärmeübertragende Einrichtung ein erstes Element mit niedrigem thermischen Widerstand hat, das auf dem heißen Leiter (18) befestigt ist, und ein zweites Element (15) mit niedrigem thermischen Widerstand hat, der innerhalb des zweiten Körpers (2, 4) in Kontakt mit der Wärmesenke (6) befestigt ist, und ein Flüssiggas-Medium aufweist, das einen niedrigen thermischen Widerstand hat, der zwischen dem ersten und zweiten Element (14, 15) mit neidrigem thermischen Widerstand angeordnet ist, um dazwischen einen beführungsfreien thermisch leitenden Weg (10) zu schaffen.

10. Gerät nach Anspruch 9, in dem das Medium Luft ist und in dem das erste und zweite Element (14, 15) mit niedrigem thermischen Widerstand durch einen gleichförmig beabstandeten Spalt (10) von ungefähr 0,0254 mm Länge (1 mil) getrennt sind.

11. Gerät nach Anspruch 9 oder 10, in dem das Medium einen thermischen Widerstand unterhalb von $10°C/(Watt/cm^2)$ zwischen den ersten und zweiten Elementen (14, 15) mit niedrigem thermischen Widerstand aufweist.

12. Gerät nach Anspruch 9, 10 oder 11, in dem das erste Element mit niedrigem thermischen Widerstand (14) eine konvexe, teilweise sphärische Oberfläche (12) mit einem ersten Radius $(R_1)$ aufweist, dessen Krümmungszentrum am Schnittpunkt (30) der senkrecht aufeinanderstehenden Achsen (P, Y) liegt, und in dem das zweite Element mit niedrigem thermischen Widerstand (15) eine konkave, teilweise gekrümmte Fläche (8) hat mit einem zweiten Radius $(R_2)$, der größer ist als der erste Radius $(R_1)$, um einen gleichförmigen Spalt (10) dazwischen zu bilden, und in dem das Flüssiggas-Medium den Raum einnimmt.

FIG. 1.

FIG. 2.